# EUROPEAN PATENT APPLICATION

(11) **EP 0 583 532 A1**
(43) Date of publication of application: **23.02.1994**
(21) Application number: 92830451.8
(22) Date of filing: 20.08.1992
(51) Int. Cl.: B62K 19/00, B62K 11/00

(54) **Improved motorcycle structure**

(71) Applicant: Doveri, Nicolò, I-56025 Pontedera (Pisa) (IT)
(72) Inventor: Doveri, Nicolò, I-56025 Pontedera (Pisa) (IT)
(74) Representative: Bardini, Marco Luigi

(57) **Abstract**

An improved motorcycle structure, in particular, but not exclusively, for a motorscooter, comprising a frame (30) connected to a front wheel (31) and a rear wheel (32), an engine (33) fixed to the frame (30) and operating the rear wheel (32), a body covering the frame (30), a handlebar (34) jointed to the frame (30) in order to drive the front wheel (31) and a seat (12) bearing a driver. The frame (30) comprises at least two longitudinal beams (4) linked by a front-cross member (3) to which a joint sleeve (1) of a handlebar (34) is integral, a middle-cross member (5) pivotally supporting the engine (33), a rear-cross member (6). Said longitudinal beams (4) define the lower external boundary of the motorcycle. A support (9) bearing the seat (12) is rearly integral to the beams (4). The seat (12) is linked to a bonnet (11) pivotally joined to the frame (30) and turnable between a running position (A) in which the bonnet (11) fully covers the support, and a tilted position (B) in which the access to mechanic members which are located inside the support (9) itself is allowed.

## Description

The present invention generally relates to the motor vehicles field and more precisely it relates to an improved motorcycle structure. In particular, but not exclusively, this structure refers to a motorscooter.

Motorscooters, which as well known are motorcycles with small diameter wheels, an open frame and a low-middle swept volume, if possible, need a structure able to fulfil the following requirements:
- to assure a rigid and strong fastening among functional members of the vehicle;
- to allow for a confortable seat for a driver and for a possible passenger as well as the possibility to carry small articles;
- to make easier the access to mechanical members of the vehicle in case of maintenance and/or repair problems;
- to be produced in an easy and inexpensive way.

At the present time a motorscooters' structure normally belongs to one of the two following classes:
a) frame and body are inseparable and made of stamped and welded plate according to the "bearing body" concept typical of the car industry;
b) frame of the vehicle formed by a bearing truss, generally made of tubular and plate elements, sheated with a light panelled body movably secured by screws or equivalent means.

In the first case the resulting vehicle has low production costs at a high production rate and is provided with a strong, rigid structure of limited weight. However, there are the inconveniences of the large investments required, greater design and set up difficulties, and few possibilities of aesthetical modifications at limited costs.

In the other case the body can be entirely renewed from the aesthetical point of view, without substantial changes on the frame being required and with consequent limited investiments. On the other hand, there are the inconveniences of higher manufacturing costs and inferior sturdiness of the whole structure.

The object of the present invention is to provide an improved motorcycle structure, in particular but not exclusively a motorscooter, capable of fulfilling the above cited requirements and of limiting the inconveniences of the two above described classes of structures.

The above object is achieved with an improved motorcycle structure according to the invention, characterized in that the frame comprises at least two longitudinal beams linked by a front cross member to which a handlebar joint is integral, a middle cross member pivotally supporting the engine and a rear cross member. The longitudinal beams define the lower external boundary of the motorscooter and are rearly integral to a support bearing a seat.

The support preferably comprises a substantially four-sided framework sustained by uprights fixed to the longitudinal beams. The seat is linked to a bonnet pivotally joined to the rear cross member so as to swing between a running position in which said bonnet fully covers the support, and a tilted position in which access is allowed to mechanic members which are located inside the support itself.

Further characteristics and advantages of the improved motorcycle structure according to the present invention will be made clearer with the following description of a one of its possible embodiments given as an example, but not limitative with reference to the attached drawings.

In the drawings:
- figure 1 shows an elevational side view of an improved motorscooter structure according to the invention, where the corresponding body is indicated with a dashed line;
- figure 2 shows a top plane view of the frame of the motorscooter structure of figure 1;
- figure 3 shows a detailed side view of the rear bonnet articulation joint of the structure of the figure 1.
   With reference to figures 1 and 2, a motorscooter structure comprises:
- a frame 30 connected to a front wheel 31 and a rear wheel 32; an engine 33 fixed to a frame 30 and operating rear wheel 32; a body covering the frame and comprising a front shield 37 and a rear bonnet 11; a handlebar 34 jointed to the frame in order to drive the front wheel 31; and a seat 12 bearing the driver and a possible passenger.

According to the invention, frame 30 comprises at least two longitudinal beams linked by: a front cross member 3 to which a joint sleeve 1 of the handlebar 34 is integral; a middle cross member 5 pivotally supporting at 8 the rear suspension 36 comprising the engine 33, dampers 35 and rear wheel 32; a rear cross member 6 to which is pivotally jointed a bonnet 11 bearing seat 12.

Longitudinal beams 4 define the lower external boundary of the motorscooter and have, for this reason, both structural and aesthetical functions. At a position comprised between middle-cross member 5 and rear cross member 6, a support 9 is integrally fixed to beams 4 comprising a substantially four-sided framework 9a sustained by two front uprights 7 and two rear uprights 10 fixed to beams 4 themselves. Dampers 34, only one of which is shown as a simplification, are connected to a plate 19 integral to framework 9a.

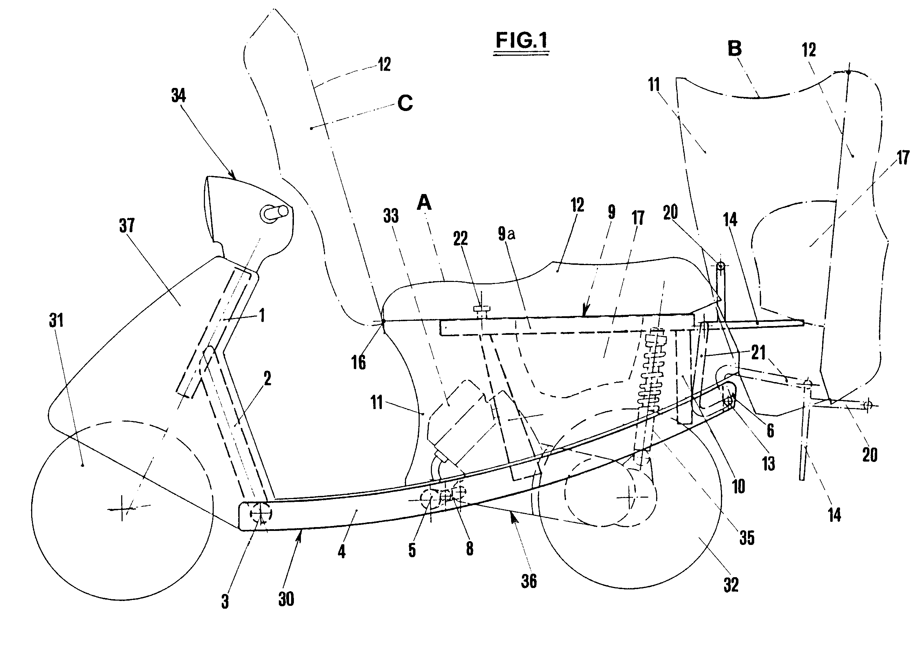

Bonnet 11 can swing, about a hinge 13, with respect to cross member 6 between a running and a tilted position, marked with A and B in figure 1 respectively.

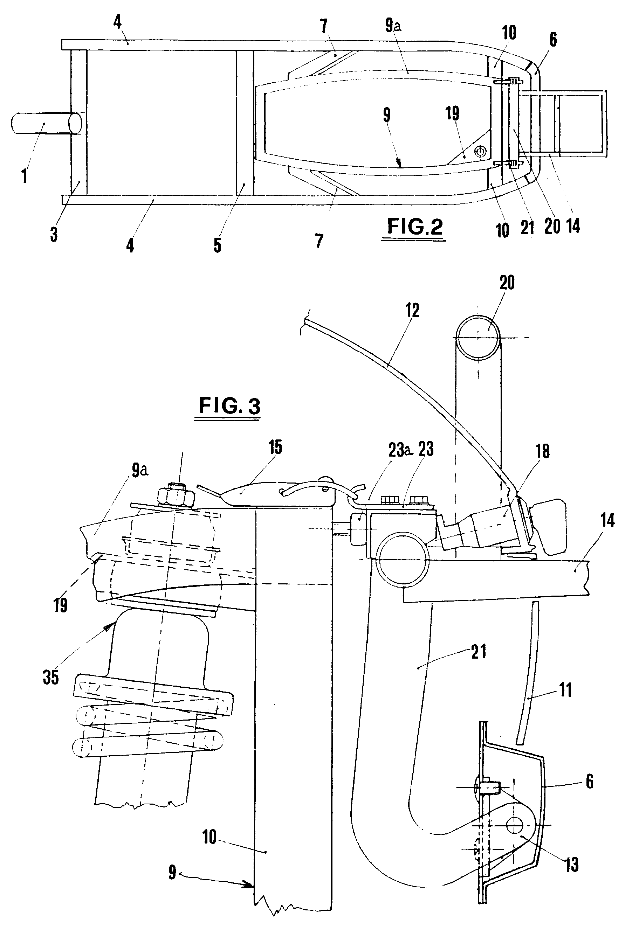

In position A seat 12 burdens the load of the passengers directly onto framework 9a of support 9, while bonnet 11 is secured to the support 9 fully covering it, without transferring loads or leaning against beams 4. Also with reference to figure 3, bonnet 11 is secured to support 9 by means of lever-clamps 15 which engage with hooks 23 and block support 9 itself against adjustable catches 23a as well as by means of a screwed knob 22 (fig.1). For raising seat 12 to position C it is necessary to release it from a lock 18 and tilt it about a pin 16, forwardly placed.

Position B can be reached by freeing clamps 15 and unscrewing knob 22 in order to tilt bonnet 12, integral to arms 21, about hinge 13. In such a position it is possible to have access to the mechanic members which are normally covered by bonnet 11 and are located inside and beneath support 9. Bonnet 11 can be tilted raising its front part, where holding means, not shown, can be advantageously provided for.

As shown in figure 1, the raising of seat 12 to position C, in addition to allowing the release and the tilting of bonnet 11, is necessary to approach a hollow holder 17 which is formed in the latter and which, in position A, extends in the inner space of support 9. In particular, holder 17 as shown in figure 1, is shaped to accomodate the driver's crash-helmet.

A parcel grid 14 is integral to arms 21 and comprises a handle 20 by means of which the lifting of the motorscooter during parking on the stand is made easier and which a possible second passenger riding behind the driver can hold on to. Parcel grid 14, unlike the known art, is directly fixed to the frame by means of hinge 13, lever-clamps 15 and adjustable catch 23a without burdening bonnet 11 and thus preventing damages due to overload on the latter, as occurs, on the contrary, in some current motorscooter models.

The improved motorcycle structure according to the invention has many advantages with respect to similar vehicles belonging to the above cited classes. Among these advantages the following are particularly important and new:
- an easy and immediate access to mechanic members of the vehicle is possible;
- the presence of the longitudinal beams 4, which replace body elements performing only aesthetical functions with a resulting better weight and stiffness of the structure as well as an easier manufacturing;
- the possibility of using the space included between beams 4 and cross members 3 and 5 for a fuel tank extending in the volume available below a footboard not shown;
- the possibility of making bonnet 11 of a very light material in account of the lack of burdens on it with a resulting lightening of the whole vehicle.

Finally, though bonnet 11 is shown hinged rearwardly with respect to frame 30, according to different embodiments of the invention, said hinge can be placed elsewhere, like, as an example, hinged in a front position (forward rotation of the bonnet) or a side position (sidewise rotation of the bonnet).

## Claims

1. Improved motorcycle structure, in particular, but not exclusively, for a motorscooter, comprising a frame (30) connected to a front wheel (31) and a rear wheel (32) an engine (33) fixed to said frame (30) and operating said rear wheel (32), a body covering said frame (30), a handlebar (34) jointed to said frame (30) in order to drive said front wheel (31) and a seat (12) for a driver, characterized in that said frame (30) comprises at least two longitudinal beams (4) linked by a front cross member (3) to which a handlebar (34) joint sleeve (1) is integral, a middle cross member (5) pivotally supporting said engine (33), and the rear cross member (6), said longitudinal beams (34) defining the lower internal boundary of the motorcycle, a support (9) bearing said seat (12) being rearly integral to said beams (4), said seat (12) being linked to a bonnet (11) pivotally jointed to said frame (30) and turnable between a running position (A) in which said bonnet (11) fully covers the support, and a tilted position (B) in which the access to mechanic members which are present inside the support (9) itself is allowed.

2. Improved motorcycle structure according to claim 1, wherein said support (9) comprises a substantially four-sided framework (9a) sustained by uprights (7, 10) fixed to said longitudinal beams.

3. Improved motorcycle structure according to claims 1 and 2, wherein said seat (12), while said bonnet (11) is in said running position (A), leans on said framework (9a) and said bonnet (11) hangs on said seat (12) without leaning on the lower part of said support.

4. Improved motorcycle structure according to the previous claims, wherein said bonnet (11) is pivotally joined (13) to said rear cross tube (6) of said frame by means of rigid arms (21).

5. Improved motorcycle structure according to claims 3 and 4, wherein said seat (12) is pivotally joined (16) to said bonnet (11), the latter comprising at least a hollow holder (17) placed below said seat (12) and extending in said framework (9a) of said support (9) when said bonnet (11) is in said running position (A), said hollow holder being accessible only after a rotation (C) of said seat (12) with respect to said bonnet (11).

6. Improved motorcycle structure according to the previous claims, wherein said bonnet (11) is secured to said support (9) by clamping means (15, 22) which are accessible after a rotation of said seat (12), the latter being securable to said bonnet by means of a lock (18).

7. Improved motorcycle structure according to the previous claims, wherein a parcel grid (14) is rearwardly integral to said bonnet (11) in correspondence with said rigid arms (21) and is provided with an auxiliary handle (20) extending from it, there being provided means for unburdening said bonnet (11) from loads present on said grid (14).

8. Improved motorcycle structure according to claim 7, wherein said means for unburdening said bonnet (11) comprises at least an adjustable catch (23a) engaging against a hook (23) integral to said arms (21), with said hook (23) engaging said clamping means (15) which are provided on said support (9).

9. Improved motorcycle structure according to claim 1, wherein said bonnet (11) is hinged to said frame (30) in a front position.

10. Improved motorcycle structure according to claim 1, wherein said bonnet (11) is hinged to said frame (30) in a side position.
